# DEMANDE DE BREVET EUROPEEN

(11) **EP 1 936 299 A1**
(43) Date de publication de la demande: **25.06.2008**
(21) Numéro de dépôt: 06126973.4
(22) Date de dépôt: 22.12.2006
(51) Int. Cl.: F24J 2/04, F24J 2/40

(54) **DISPOSITIF HELIOTHERMIQUE DE CHAUFFAGE ET DISPOSITIF DE RAFRAICHISSEMENT**

(71) Demandeur: Clanchet, M. François, 57150 Creutzwald (FR)
(72) Inventeur: Clanchet, M. François, 57150 Creutzwald (FR)
(74) Mandataire: Schmitz, Jean-Marie

(57) **Abrégé**

Dispositif de chauffage (30)/rafraîchissement (40) d'un corps à réchauffer/rafraîchir (21), comprenant:
un panneau capteur (05) d'énergie solaire (04);
un premier panneau isolant (09) et un second panneau isolant (09a) disposés entre le panneau capteur (06) et le corps à réchauffer/rafraîchir (21);
un premier passage d'air (07) situé entre le panneau capteur (06) et les deux panneaux isolants (09,09a);
un second passage d'air (22) situé entre le premier panneau isolant (09) et le corps à réchauffer/rafraîchir (21);
un troisième passage d'air (19) supérieur situé en haut du premier panneau isolant (09);
un quatrième passage d'air (14) inférieur situé en bas du premier panneau isolant (09);
un premier clapet (A18) situé dans le premier passage d'air (07), ce premier clapet (A18) étant mobile entre une position ouverte et une position fermée;
un second clapet (A26) situé dans le second passage d'air (22), ce second clapet (A26) étant mobile entre une position ouverte;
deux moteurs (M18,M19) disposés dans le premier panneau isolant (09), chaque moteur (M18,M19) comportant au moins un piston (P20,P21) pour agir sur chacun des clapets (A18,A26) en vue de les actionner, ces moteurs (M18,M19) étant commandés automatiquement en réponse à la température dans le premier passage d'air (07), la température ambiante externe et la température interne du corps à réchauffer/rafraîchir (21), en vue d'un fonctionnement en mode de chauffage, en mode de rafraîchissement ou en mode d'arrêt.

## Description

La présente invention décrit un dispositif héliothermique de chauffage ainsi qu'un dispositif de rafraîchissement d'immeubles.

Le domaine technique de la présente invention concerne le domaine du chauffage d'immeubles par des panneaux capteurs (05) d'énergie radiative ainsi que le domaine du rafraîchissement d'immeubles par des panneaux capteurs de fluide convectif frais et des ouvertures d'aération dans ce panneau.

Ces panneaux (05), métalliques, ou en autres matériaux aux caractéristiques identiques, sont de faible épaisseur recouverts du côté captation d'énergie solaire (04) d'une couche de protection (06) de couleur noire mate de préférence, ou toute autre couleur choisie dans une étroite gamme de longueur d'onde du spectre du visible, donc du rayonnement solaire, sur la base de la loi de WIEN.

Les locaux d'immeubles sont généralement chauffés par des radiateurs et ne sont pas souvent climatisés, les équipements de climatisation étant très coûteux.

La présente invention décrit un dispositif automatisé d'un système d'isolation thermique permettant de faire passer d'une face à l'autre d'un calorifuge (09) de l'énergie recueillie sous forme radiative ou convective. Cette automatisation écarte une manipulation manuelle ou bien le fonctionnement sous l'unique influence des différences de pression obtenues dans les lames d'air (07) et (22) elles-mêmes résultant uniquement des différences de températures entre ces deux lames, ce qui provoque des surchauffes dans le corps à réchauffer (21) en intersaison et en été. L'inconvénient en est que les deux dispositifs peuvent rester en position «ouvert» même par des températures extérieures basses et sans illumination radiative, ce qui entraîne nécessairement l'inversion des circulations d'air dans les lames (22) et (07) et par la suite, la perte des énergies emmagasinées au cours des périodes illuminées précédentes. La mise au point de ces systèmes à fonctionnement automatisé élaboré, passent par plusieurs phases, afin de maintenir l'énergie captée dans le corps à réchauffer (21) à l'aide d'un isolant thermique (09).

La présente invention a pour but une installation de chauffage économique, écologique, conviviale, silencieuse, inépuisable, comportant des panneaux capteurs (05) d'énergie radiative (04) pendant les périodes ensoleillées de jour qui peut aussi fonctionner comme installation de rafraîchissement la nuit avec ces mêmes panneaux (05) fonctionnant comme capteur de frigories par convection.

La présente invention comprend une centrale de régulation (99) et plusieurs moteurs (M.18) et (M.19) entraînant chacun un piston (P.21) et (P.20) respectivement.

L'effet technique procuré est que la centrale de régulation (99) contrôle automatiquement l'enclenchement des moteurs de sorte à optimiser le chauffage ou le rafraîchissement d'un immeuble en fonction de la température extérieure et de l'ensoleillement.

Le problème technique à résoudre est d'automatiser le dispositif connu de l'art antérieur de manière à faire des économies d'énergie à l'intérieur d'immeubles entre autres.

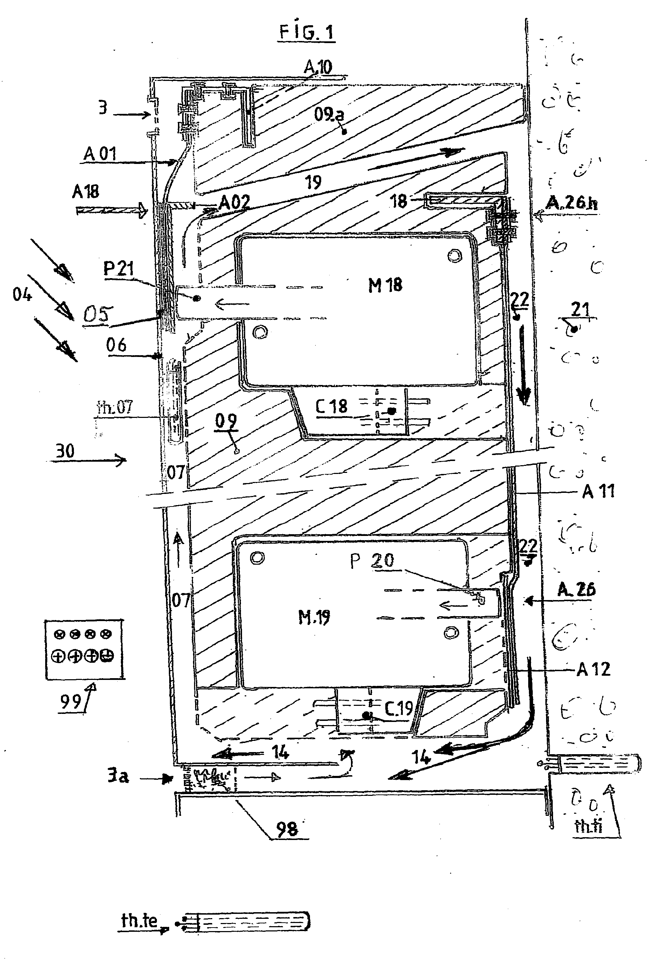

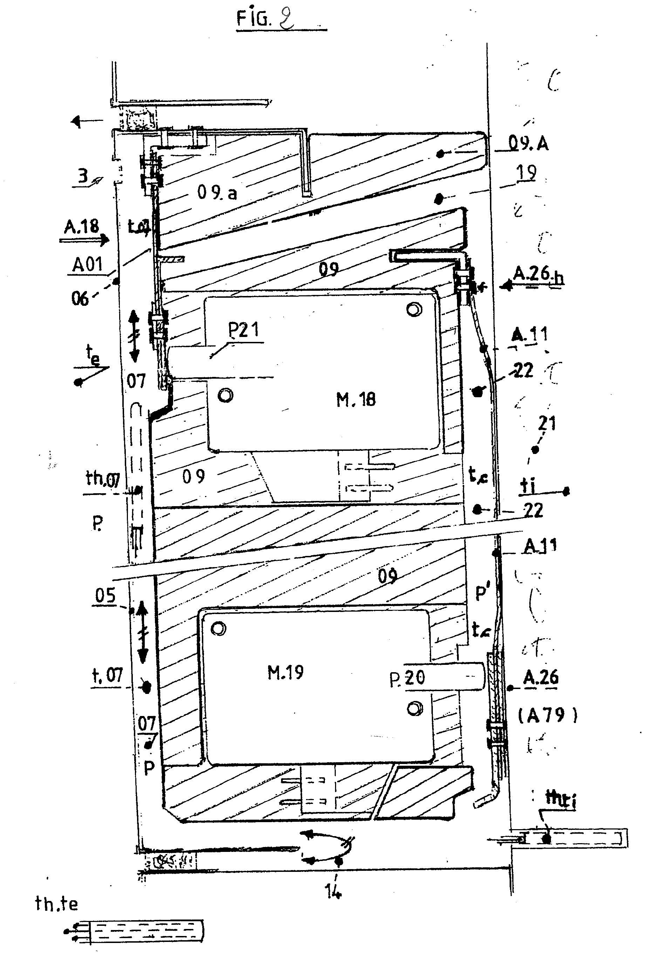

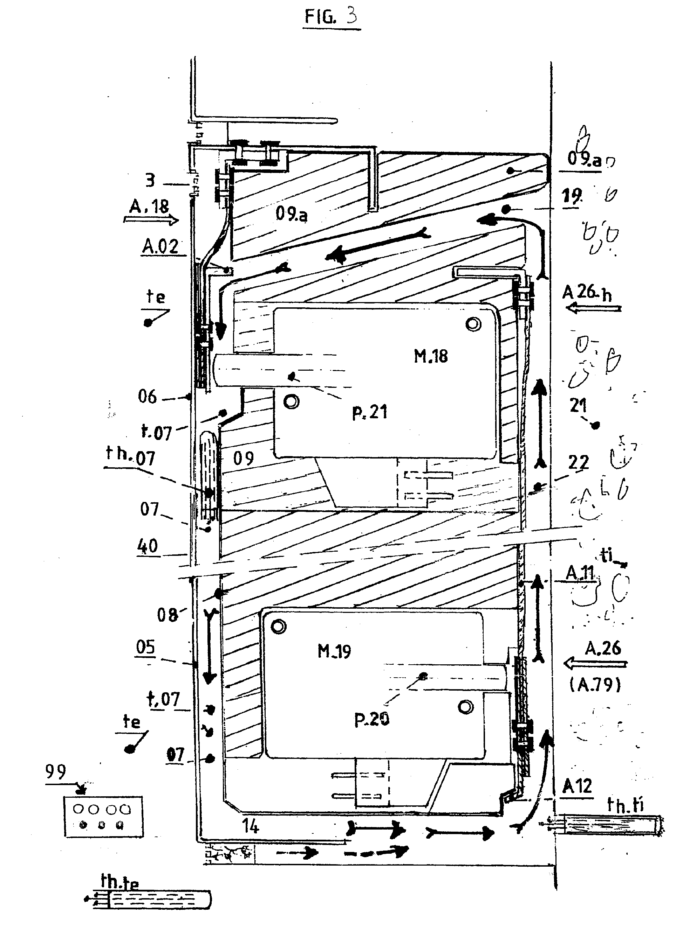

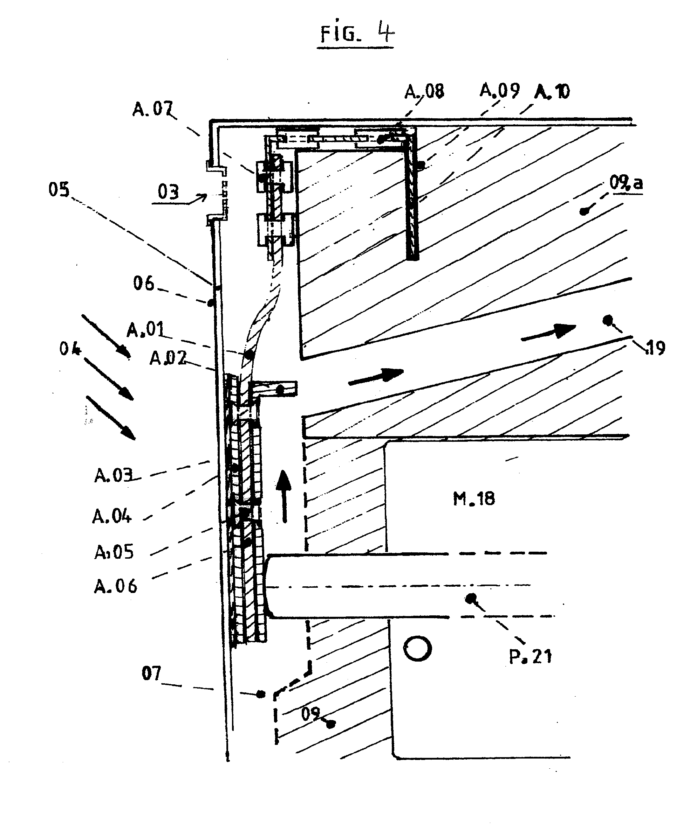

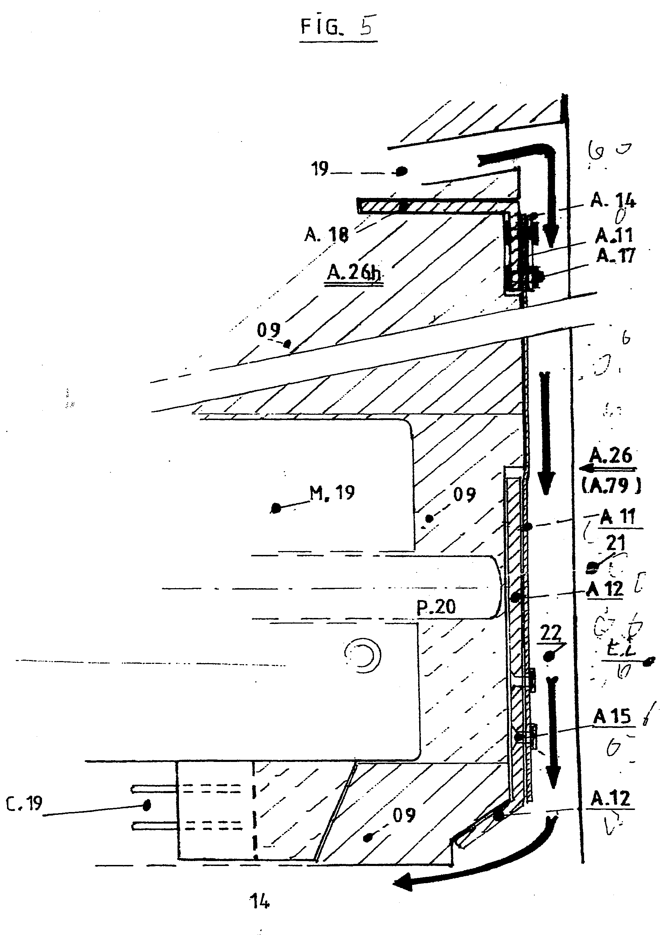

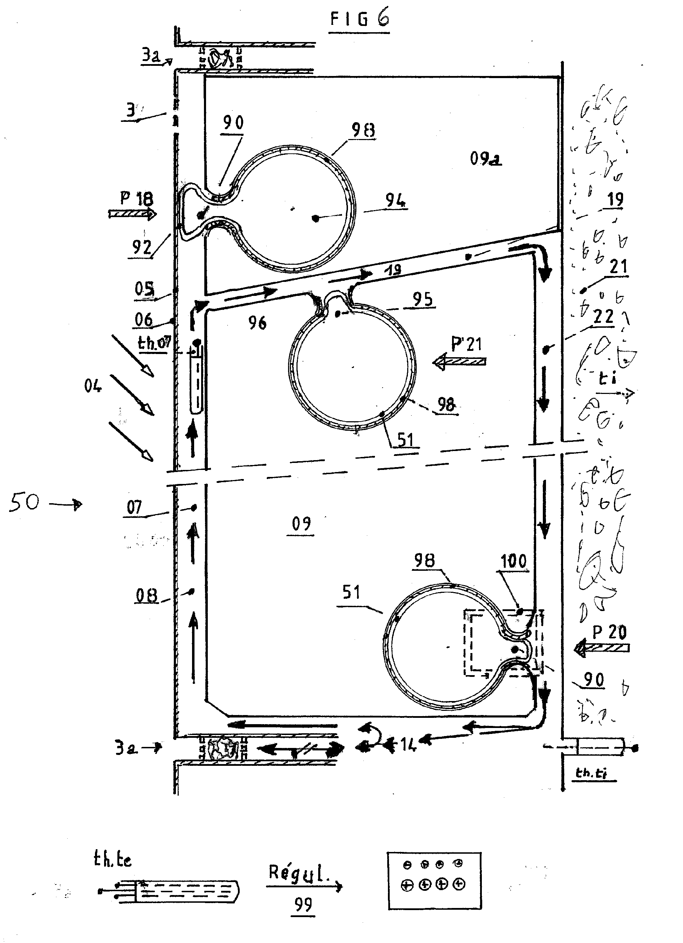

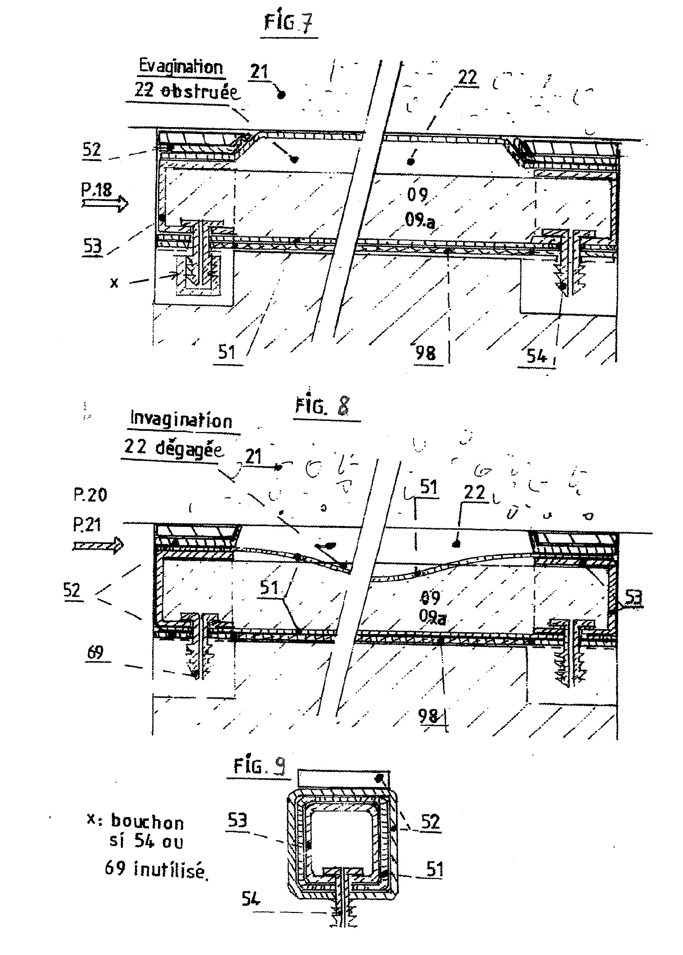

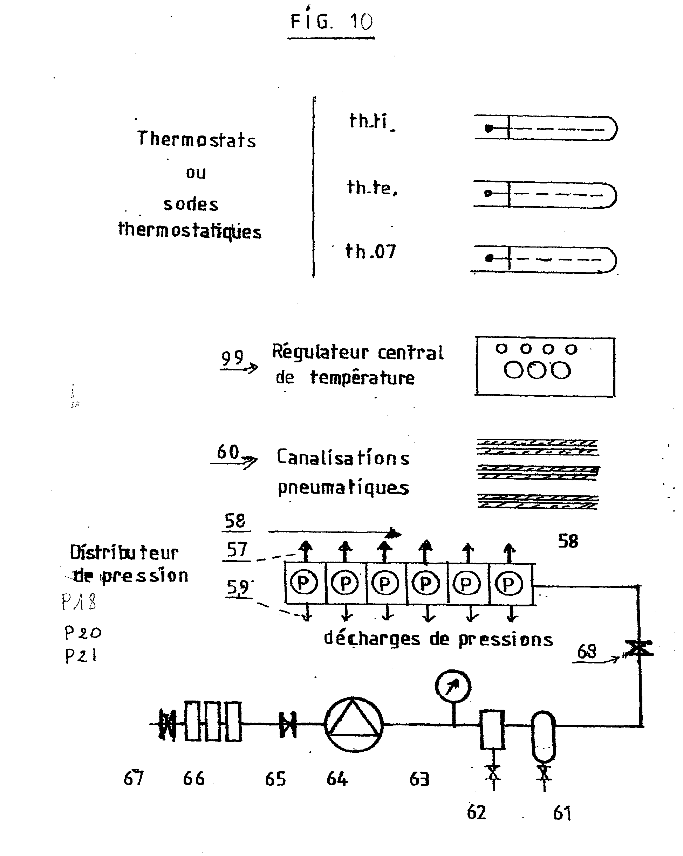

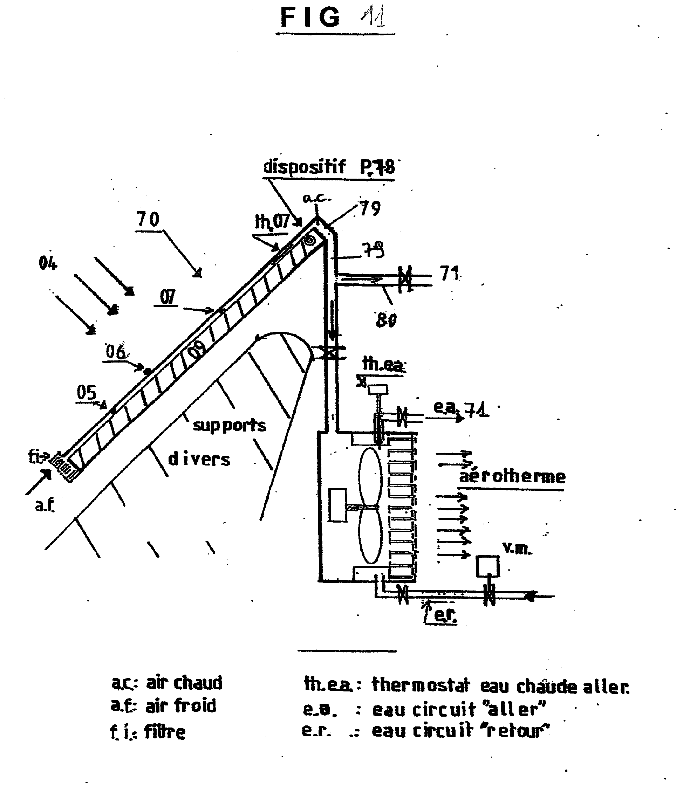

**La présente invention sera mieux comprise au vu des figures suivantes :**
**La** **figure 1**, planche 1/11 représente le dispositif de chauffage (30) en «phase hivernale» avec ensoleillement (04).
**La** **figure 2****,** planche 2/11, représente le dispositif en «phase hivernale» sans ensoleillement, la nuit par exemple où la température extérieure est souvent basse. Toute circulation d'air entre les lames d'air (07), (19) et (22) est bloquée. Le système fonctionne en simple isolation.
**La** **figure 3**, planche 3/11 , représente le dispositif de rafraîchissement (40) lors d'une nuit fraîche en été. La circulation d'air est inversée descendant par la lame d'air (07), passant par la lame d'air (14) à la base du panneau (09), remonte par la lame d'air (22), en rafraîchissant le corps (21), mur extérieur d'immeubles par ex.
**La** **figure 4**, planche 4/11, représente le dispositif A.18 détaillé comprenant les lames d'air (07) et (19), le piston (P.21) en position « sortie » laissant donc passer l'air de la lame d'air (07) vers la lame d'air (19), la lame souple (A01) ouvrant le passage vers la lame d'air (19) et barre le passage vers l'ouverture d'aération supérieure (03).
**La** **figure 5****,** planche 5/11, représente les dispositifs A.26 et A26h détaillés comprenant les lames d'air (19), (22) et (14), le piston P.20 en position rétractée laissant ainsi passer l'air de la lame d'air (22) vers la lame d'air (14), la lame souple A11 ouvrant le passage vers la lame d'air (14).
**La** **figure 6**, planche 6/11, représente, en variante, un dispositif pneumatique (50) de chauffage en saisons froides ou de rafraichissement en saisons chaudes (étés).
**La** **figure 7**, planche 7/11, représente un cliché répertorié en (100) sur la figure 8, planche 7/11 et notamment une coupe en section du dispositif pneumatique P20 à ce niveau avec le tuyau (51) évaginé dans la lame d'air (22). L'échelle de grandeur n'est pas respectée sur la figure 7.
**La** **figure 8**, planche 7/11, représente un cliché répertorié en (100) sur la figure 8 et notamment une coupe en section du dispositif pneumatique P20 à ce niveau avec le tuyau (51) invaginé hors la lame d'air (22). L'échelle de grandeur n'est pas respectée sur la figure 8.
**La** **figure 9**, planche 7/11, représente le système de fixation du tuyau (51), lequel tuyau (51) est compris entre un tube de serrage (52) et un embout d'étanchéité (53); le raccord (54) passe au travers de l'embout d'étanchéité (53), du tuyau (51) et du tube de serrage (52).
**La** **figure 10**, planche 8/11, représente le dispositif de régulation comportant une première vanne de sectionnement d'air (67), un filtre d'air (66), une seconde vanne de sectionnement d'air (65), un compresseur d'air (64), un manostat (63), un dessiccateur (62), un filtre d'huile (61), une troisième vanne de sectionnement d'air (68), un distributeur de pression (58) comportant des sorties d'air (57) alimentant en pression distinctement les dispositifs pneumatiques P18, P20, ou P21 suivant les zones desservies. Les sorties d'air (59) permettent de décharger la pression d'air dans les circuits d'air comme indiqué en fig. 10, (P.21). La centrale de régulation (99) reçoit les informations électriques des thermostats ou sondes thermostatiques correspondant à une température d'une sonde extérieure (th te), d'une sonde intérieure (th ti) et d'une sonde (th 07) située dans la lame d'air (07). Ces informations électriques sont traitées par la centrale de régulation (99) qui donne l'ordre au distributeur de pression (58) d'alimenter ou de décharger en pression les dispositifs pneumatiques P18, P20, ou P21.
**La** **figure 11****, planche 9/11** représente le dispositif héliothermique de chauffage (70) disposé en toiture d'immeubles pour la production d'eau chaude, par ex. Ce dispositif peut être monté en n'importe quel endroit ensoleillé, par ex. sur des terrasses, caravanes, camping, jardins, hydratation de sols cultivés, etc.

**L'objectif de la présente demande de brevet est l'automatisation** du système. Cet objectif est atteint par l'introduction des dispositifs automatiques ou semi-automatiques (A.18) et (A26+A.26.h) qui sont positionnés en «ouverture» ou «fermeture» par des micromoteurs (M.18) et (M.19).

Ces dispositifs permettent de faire fonctionner de façon automatique toutes les composantes de l'invention en question, par des mesures précises de températures à l'aide de thermostats ou de sondes de températures, à savoir:
- (th.07): sonde ou thermostat: mesure de la température (t.07) de la lame d'air (07),
- (th.te): sonde ou thermostat: mesure de la température extérieure à l'ombre (te).
- (th.ti): sonde ou thermostat: mesure de la température intérieure du corps stockeur (21).

Ces sondes ou thermostats agissent directement ou indirectement sur les moteurs à basse tension, monophasés, (M.18) et (M.19). Ces moteurs sont identiques et comprennent chacun:
- un piston (P20) pour le moteur (M.19),
- un piston (P21) pour le moteur (M.18),

Les pistons sont actionnés par un micromoteur qui entraîne un réducteur de mouvement à engrenages, qui fait avancer ou reculer le piston, suivant le sens d'alimentation des micromoteurs, qui «tournent» «à gauche» ou «à droite» suivant la polarité de leur alimentation. Ce sont des moteurs monophasés, à courant continu, de préférence 12 volts courant continu.

L'inversion de leur alimentation suffit à obtenir l'ouverture ou la fermeture des dispositifs (A.18) et (A.26+A.26.h)

Par ailleurs, premièrement le fonctionnement des moteurs est «doux», donc sans nuisance sonore; deuxièmement, ils sont conformes à la réglementation; troisièmement ils fonctionnent aussi bien en «tout ou rien» qu'en «progressif».

Dans la grande majorité des cas, quatre moteurs sont nécessaires pour chaque panneau de dimension standard. Dans ces cas :
deux moteurs M.19 sont encastrés dans le panneau calorifuge 09, l'un à l'extrémité gauche et l'autre à l'extrémité droite et en bas du panneau calorifuge 09, le piston P.20 faisant face aux dispositifs A.26 aménagé dans la lame d'air 22.
deux moteurs M.18 sont encastrés dans le panneaux calorifuge 09, l'un à l'extrémité gauche et l'autre à l'extrémité droite et en haut du panneau calorifuge 09, le piston P.21 faisant face au dispositif A.18 aménagé en haut et sur toute la largeur de la lame d'air 07.

Ainsi, les deux dispositifs A.18 et A.26 + A.26.h sont mis dans les positions requises suivant la température visée dans le corps à réchauffer ou à rafraîchir (21).

Les moteurs peuvent être pilotés par des systèmes de régulation élaborés du type «différentiel, intégral et dérivé» afin de maintenir une température très voisine de celle nécessaire au bon fonctionnement du système.

Chaque panneau isolant est de dimensions standards 500-700 mm de large et 1500-1700 mm de hauteur, sans que la présente invention soit limitée à ces dimensions, comme expliqué ci-dessus, et est équipé de deux moteurs (M.19) en bas l'un à gauche et l'autre à droite, ainsi que de deux moteurs (M.18) en haut du panneau, l'un à gauche et l'autre à droite du panneau, à hauteur de la lame d'air (19), pour mettre les deux dispositifs (A.18) et (A.26+A.26.h) à la position voulue suivant la température visée en (t. i) dans le corps à réchauffer (21).

Dans les cas de panneaux de grandes dimensions supérieures aux dimensions standard, des moteurs supplémentaires M.18 et M.19 peuvent être placés à mi-hauteur ou toute autre hauteur ainsi qu'en tout autre endroit adéquat sur toutes les largeur et hauteur des panneaux (09).

Il en est de même des panneaux de faible hauteur ou largeur, dans lesquels cas un ou plusieurs moteurs avec leur piston peuvent être placés en tout autre endroit de sa hauteur ou de sa largeur.

Tous les panneaux peuvent être pilotés individuellement, ou bien regroupés en «zones», (certains panneaux pouvant se trouver à l'ombre tandis que d'autres se trouveront au soleil au même instant), suivant leur illumination, à un moment donné, afin d'optimiser le système qui «emmagasine» immédiatement en (21) l'énergie reçue en (07), le dispositif étant en «phase hivernale» avec ensoleillement.

Le câblage électrique qui alimente les moteurs doit être réalisé en conséquence.

Les zones peuvent être prédéterminées suivant les variations de leur illumination et peuvent ainsi être pilotées par une seule centrale de régulation par la mise en place d'un «balayage» mécanique ou électronique des différentes «zones» prédéterminées pour atteindre les températures requises des sondes (th.i) et (th.07). Ces sondes (ou thermostats) sont placées suivant l'orientation des zones, (EST, SUD, OUEST), et suivant les zones d'ombres provoquées ou non par l'environnement. Ces «zones» peuvent être présélectionnés par tranches horizontales ou verticales des panneaux, suivant les cas de figure qui se présenteront au cours de la saison de chauffe. L'emplacement de la centrale de régulation (99) peut être choisi au gré de l'utilisateur (par exemple : salon, cave, grenier, cuisine...).

Chaque panneau doit être équipé des dispositifs (A.18) et (A.26+A.26.h) ainsi que des moteurs (M.18) et (M.19) avec leur piston respectif (P.21) et (P.20).

Chaque «zone» ou façade (ou panneau fonctionnant en «individuel») doit être raccordée à une centrale de régulation pilotée par une ou plusieurs sondes (ou thermostats) (th.07). Tout ensemble doit être équipé d'une centrale de régulation avec sa sonde (ou thermostat) extérieure (th.te) ainsi que d'une sonde (ou thermostat) (th.ti) nécessaire pour le fonctionnement du rafraîchissement de nuit en été de la masse ou corps à rafraîchir (21).

**Un thermostat** se définit comme étant un dispositif de réglage de la température; dont le principe est basé sur la dilatation et la contraction d'un fluide (liquide ou gaz) lors des variations de température, ces dilatations et contractions agissent mécaniquement sur un contact électrique qui ouvre et ferme les circuits.

**Une sonde** se définit comme un dispositif de mesure d'une différence de potentiel entre deux métaux (ou alliages de métaux). L'avantage d'une sonde par rapport à un thermostat est qu'une sonde occupe un encombrement inférieur à celui d'un thermostat et les consignes sont affichées sur la centrale de régulation. La centrale de régulation fonctionne soit avec des sondes soit avec des thermostats mais jamais en combinaison avec une sonde et un thermostat suivant l'état actuel de la technique.
La température visée dans la lame d'air transverse (19) doit être supérieure de 15°C environ à celle de (t.i) dans le corps à réchauffer (21), et ceci grâce à toute position intermédiaire du piston (P.20) agissant ainsi sur le débit d'air chaud dans la lame d'air (22), et par voie de conséquence, sur sa température, qui sera d'autant plus élevée que le débit sera faible pour une illumination donnée.

**Le dispositif de chauffage (30)** comprend un panneau capteur (05) d'énergie radiative (04), une ouverture d'aération supérieure (03) dans ledit panneau (05), une ouverture d'aération inférieure (3a) à la base dudit panneau (05), un panneau isolant (09), un autre panneau isolant (09a), un corps à réchauffer (21), une circulation d'air dans une lame d'air chauffée par ledit panneau (05), ladite lame d'air (07) est en contact avec le panneau capteur d'énergie (05), une lame d'air (19) comprise entre le panneau isolant (09) et le panneau isolant (09a) servant à transférer l'air chaud vers la lame d'air (22), qui est en contact avec le corps à réchauffer (21) et une lame d'air (14) faisant la liaison, à la base des panneaux (09), avec une ouverture d'aération dudit panneau (05) et permettant aussi la circulation partielle de l'air chaud vers la lame d'air (07), le dispositif comprenant en outre une centrale de régulation (99) recevant des informations d'une sonde extérieure (th te), d'une sonde intérieure (th ti) et d'une sonde (th 07), située dans la lame d'air (07), plusieurs moteurs (M18, M19) sont fixés dans un logement situé dans le panneau isolant (09), lesdits moteurs entraînant chacun un seul piston (P20 ou P21) agissant chacun séparément sur une lame souple (A01) maintenue à son extrémité par un raidisseur (A02) et une lame souple (A11) maintenue à son extrémité par un raidisseur (A12), ledit piston (P20) et ledit piston (P21) libérant simultanément la circulation de l'air dans la lame d'air (19) et dans la lame d'air (22), la libération de la circulation de l'air dans ces lames d'air (19) et (22) ayant pour effet de réchauffer le corps à réchauffer (21), lesdits moteurs (M18, M19) étant commandés par ladite centrale de régulation (99).

La lame souple (A01) est fixée dans le panneau isolant (09) par un étrier (A10). La lame souple (A11) est fixée en partie haute du panneau isolant (09) par un étrier (A18). Les moteurs (M18, M19) peuvent être commandés soit par une centrale de régulation (99), soit directement par les thermostats (th te) (th ti) et (th 07).

Le dispositif de rafraîchissement (40) fonctionnant lors d'une nuit fraîche d'été comprend un panneau capteur de fraîcheur par convection (05) (convection = mouvement ascendant ou descendant d'un fluide avec transport de chaleur d'un corps chaud (dispositif 40) vers le milieu extérieur (te), sous l'influence de différences de température), une ouverture d'aération supérieure (3) dans ledit panneau (05), une ouverture d'aération inférieure (3a) à la base dudit panneau (05), un panneau isolant (09), un autre panneau isolant (09a), un corps à rafraîchir (21), une circulation d'air dans une lame d'air (07) rafraîchie par ledit panneau (05), une lame d'air (19) assurant le passage de l'air frais entre le panneau isolant (09) et le panneau isolant (09a), et d'une lame d'air (22) en contact avec le corps à rafraîchir (21) et une lame d'air (14) faisant la liaison avec une ouverture d'aération dudit panneau (05) ledit dispositif est piloté par une centrale de régulation (99) recevant des informations d'une sonde extérieure (th te), d'une sonde intérieure (th ti) et d'une sonde (th 07) située dans la lame d'air (07), plusieurs moteurs (M18, M19) fixés dans un logement situé dans le panneau isolant (09), lesdits moteurs entraînent chacun un seul piston(s) (P20 ou P21) agissant chacun séparément sur une lame souple (A01) maintenue à son extrémité par un raidisseur (A02) et une lame souple (A11) maintenue à son extrémité par un raidisseur (A12), ledit piston (P20) et ledit piston (P21) libérant simultanément la circulation de l'air dans la lame d'air (19) et dans la lame d'air (22), la libération de la circulation de l'air dans ces lames d'air (19) et (22) ayant pour effet de rafraîchir le corps (21), lesdits moteurs (M18, M19) sont commandés par ladite centrale de régulation.

La lame souple (A01) est fixée dans le panneau isolant (09) par un étrier (A10). La lame souple (A11) est fixée dans le panneau isolant (09) par un étrier (A18). Les moteurs (M18, M19) peuvent être commandés soit par une centrale de régulation, soit par les thermostats (th te) (th ti) et (th 07).

Le câblage électrique entre les panneaux ainsi qu'entre les différents capteurs de température, la centrale de régulation d'une part et le/les moteur(s) d'autre part se fait dans une rainure (saignée) pratiquée dans le calorifuge (09) coté corps à réchauffer (21). La connexion entre les fils des câbles se fait dans une cavité pratiquée dans la face avant du calorifuge (09) face à la lame d'air (07).

**TROIS PHASES** distinctes **de FONCTIONNEMENT** sont mises en jeu pour l'obtention des résultats souhaités.

### PHASE I - HIVER AVEC ENSOLEILLEMENT (FIGURE 1)

C'est la phase la plus importante permettant de capter l'énergie solaire (04) à l'aide des panneaux (05) posés verticalement dans les cas les plus fréquents, ou bien, si possible, perpendiculairement au rayonnement solaire, de manière à transformer l'énergie solaire en énergie calorifique en réchauffant une lame ou conduit d'air (07) dans laquelle se crée un courant de circulation d'air chaud ascendant du fait de son échauffement, puis passe par une lame d'air (19) ascendante inclinée d'environ 15° par rapport à l'horizontale pour arriver au sommet d'une lame d'air (22) située entre le calorifuge (09) et un corps à réchauffer (21) (mur d'un immeuble, bâtiment, entrepôt, habitation, maison), auquel elle cède l'énergie calorifique, et, en se refroidissant, prend une circulation descendante dans cette lame d'air (22), du fait de l'effet thermosiphon (phénomène de circulation d'un fluide, lié aux différences de densité, dues à des différences de température dans un récipient ou un circuit plus ou moins complexe).

La température mesurée en (th.07) monte au minimum à 35-45°C et peut atteindre des valeurs habituelles de 55-65°C et bien au-delà. L'air de cette lame (22), étant bien chaud et sec, se charge de l'humidité accumulée dans le mur (21) dû à l'activité humaine (cuisine, transpiration, bains, etc) ou à la saturation en humidité de l'air ambiant, et arrivé dans la partie basse du panneau, où une partie est recyclée par la lame (07), une autre partie est évacuée à l'air libre par une ouverture d'aération inférieure située au bas du panneau, y entraînant l'humidité vers l'extérieur.

Cette phase, base du système, doit être bien maîtrisée pour en obtenir les résultats surprenant et spectaculaires souhaités, en particulier la régulation doit être bien adaptée à chaque cas par l'affichage soigné d'une «courbe de chauffe» adéquate, suivant chaque cas.

### PHASE II : HIVER SANS ENSOLEILLEMENT

### (FIGURE 2 - PLANCHE 2)

C'est la phase de conservation de l'énergie captée et emmagasinée en phase I dans le corps à réchauffer (21).
La température (ti) de la masse ou corps à réchauffer (21) ainsi que celle (tc) de la lame d'air (22) sont plus élevées que celle (t.07) de la lame d'air (07), ainsi que celle de la sonde (th.te).
**POSITIONS des DISPOSITIFS - DISPOSITIF (A.18) (****FIGURE 2****, planche 2/11)** Toute circulation d'air entre les lames d'air (07), (19) et (22) doit être bloquée. Le système fonctionne en simple isolation.

A cette fin, l'élément principal de ce dispositif est la lame souple (A.01), d'une épaisseur d'environ 0,5 mm, en matière résistante aux températures de - 40°C à +130°C, ainsi qu'au vieillissement et aux intempéries (EPDM ou similaire). Sa fonction est de libérer le passage de l'air de la lame (07) vers l'air libre. Cette lame souple est maintenue en haut du panneau du calorifuge (09.A) par un étrier (A.01) ainsi que par des rivets (A.07). A hauteur du passage dans la lame (19), un raidisseur (A02) est enserré d'un côté par une lame d'acier (A.04) et de l'autre côté (côté calorifuge) (09), par une autre lame d'acier (A.04) perpendiculaire à ce raidisseur servant à maintenir ce raidisseur bien droit sur toute la largeur du panneau de calorifuge (09). Du côté extérieur du panneau (A.05), une bande de matière souple (A.03) protège ce panneau des efforts répétés du piston (P21) sur ce panneau (05).

Le moteur (M.18) est identique au moteur (M.19): alimentation en courant monophasé, continu, moteurs à inversion de rotation pour faire sortir ou reculer le piston (P21) ou (P20) respectivement, en douceur. Il est à «action progressive» ou «tout ou rien». Un de ces moteurs est monté à la base et de chaque côté sur les panneaux de calorifuge (09).

### Analyse de leurs actions:

Le piston (P21) du moteur (M.18) est en position rétractée. Le dispositif (A.18) est en position lame d'air (19) fermée. Le passage de l'air dans la lame (19) est bloqué.
Le passage de l'air dans la lame (07) se fait vers l'extérieur à partir de l'ouverture d'aération (03) supérieure du panneau (05).

Le piston (P20) du moteur ( M.19) est en position de «sortie». Lorsque le dispositif (A.26+A.26.h) est en position fermée, la circulation de l'air est bloquée dans la lame (22). L'objectif de bloquer toute la circulation de l'air dans le système lui-même est atteint, et l'isolant (09) joue son rôle à part entière.

Afin de conserver au maximum l'énergie emmagasinée dans le corps à réchauffer (21), une lame en matière souple A.11 (FIG.5, planche 5/11); et résistante aux températures jusqu'à 140°C est plaquée contre le corps à réchauffer (21) par le fait d'une légère surpression de l'air créée dans la lame d'air (22) due à sa température plus élevée qu'en (th.07). Cette position résulte de la position «sortie» du piston (P20) du moteur (M.19). Cette fonction est mise en route dès les intersaisons aux températures extérieures (te) mesurées en (th.te) à moins de 15°C et surtout et uniquement hors les périodes d'illumination.

La lame (A.11) est maintenue par un dispositif (A.26.h) en haut du panneau d'isolant (09), et descend le long de la paroi (21) jusqu'en bas de ce panneau assurant une bonne étanchéité entre la lame d'air (22) et le corps à réchauffer ou paroi (21).

### PHASE III : ETES CHAUDS - NUITS FRAICHES (FIGURE 3 - PLANCHE 3/11)

Cette phase s'applique aux journées chaudes et aux brises fraîches des nuits d'été.

Elle permet le rafraîchissement du corps à réchauffer (21), apportant ainsi un meilleur confort à l'intérieur des immeubles en été. Les dispositifs (A.18) et (A.26+26.h) sont pilotés en position «ouverture» laissant, sous l'effet thermosiphon, le passage à l'air frais venant de l'extérieur par l'ouverture 3.a ou rafraîchi au contact de la plaque (05).

La centrale de régulation ou la sonde (ou thermostat) (th.te) a toute l'autorité sur l'ensemble du système.

Ainsi, les conditions de bon fonctionnement sont que la température de la lame d'air (22) doit être plus élevée que celle (t.e) de l'air extérieur au système, ainsi que celle de la lame d'air (07). L'effet thermosiphon s'établit créant un courant d'air ascendant dans la lame (22), passe par la lame (19) pour redescendre par la lame d'air 07 le long de la paroi du panneau (05) en s'y refroidissant. Le cycle perdure aussi longtemps qu'il existe un écart de température suffisant entre les deux milieux (22) et (07). Le cycle peut être interrompu volontairement en mettant le système en pilotage manuel et en commandant la fermeture des deux dispositifs (A18) et (A26 + 26h).

Afin d'éviter des fuites d'air entre les panneaux, un joint de 5 x 5 mm ou 10 x 5 mm (30) est posé sur toute la hauteur des bords gauche et droit de chaque panneau d'isolant (09). Cette disposition n'est pas nécessaire sur le bord supérieur du panneau du fait que l'isolant (09.a) est posé au-dessus de la lame d'air (19) et prend directement appui contre la paroi (21).

### DISPOSITIF PNEUMATIQUE D'ECHANGE DE CHALEUR PAR CAPTATION D'ENERGIE HELIOTHERMIQUE et/ou CONVECTIVE

### Fig. 6, planche 6/11

Fonctionnement du dispositif pneumatique de chauffage et/ou de rafraîchissement d'immeubles.

Dans la présente variante, la fermeture et l'ouverture des lames d'air 07, 19 et 22 sont commandées par des systèmes pneumatiques, en remplacement des dispositifs A.18, A.26 et A.26h, qui fonctionnement à l'aide des moteurs électriques M.18 et M.19. Respectivement, A 18 est remplacé par P. 18 et P.21. A 26+A.26h est remplacé par P.20.

Ces nouveaux dispositifs pneumatiques sont constitués principalement par les tuyaux (51) en caoutchouc ou tout autre matière souple et élastique ou non élastique, montés en position horizontale, inclinée ou verticale ou sur différentes hauteurs de chaque panneau d'isolant en face des lames d'air 22, 19 et 07 (partie haute) dans le panneau 09.A.

Le dispositif de chauffage (50) comprend un panneau capteur (05) d'énergie radiative solaire (04), un panneau isolant (09), un autre panneau isolant (09a), un corps à réchauffer (21), une circulation d'air ascendante dans une lame d'air (07) chauffée par ledit panneau (05), ladite lame d'air (07) étant en contact avec le panneau (05) capteur d'énergie, une lame d'air (19) étant comprise entre le panneau isolant (09) et le panneau isolant (09a), une lame d'air (22) étant en contact avec le corps à réchauffer (21) et une lame d'air (14) à la base du panneau (05), ce dispositif est à fonctionnement pneumatique et comprend en outre un dispositif de régulation (99) comportant un compresseur d'air (64), un manostat (63), un distributeur de pression (57), un filtre à air (66), un dessiccateur (62), une centrale de régulation (99) recevant des informations électriques correspondant à une température d'une sonde extérieure (th te), d'une sonde intérieure (th ti) et d'une sonde (th 07) située dans la lame d'air (07), un dispositif pneumatique (P18), FIG.6 - planche 6/11, comportant un tuyau (51) refermé sur lui-même étant encastré dans une cavité du calorifuge (09a) revêtu sur son périmètre, sauf au niveau de l'entrée de la cavité (90), d'une gaine de protection (98) juxtaposée à un embout d'étanchéité (53), l'entrée de la cavité (90) faisant face à la lame d'air (07), un dispositif pneumatique (P21) (Fig. 7 - planche 7/11, comportant un tuyau (51) refermé sur lui-même étant encastré dans une cavité du calorifuge (09) revêtu sur son périmètre, sauf au niveau de l'entrée de la cavité (90), d'une gaine de protection (98) juxtaposée à un embout d'étanchéité (53), l'entrée de la cavité (95) faisant face à la lame d'air (19), un dispositif pneumatique (P.20) comportant un tuyau (51) refermé sur lui-même étant encastré dans une cavité située à la base du calorifuge (09) revêtu sur son périmètre, sauf au niveau de l'entrée de la cavité (90), d'une gaine de protection (98) juxtaposée à un embout d'étanchéité (53), l'entrée de la cavité (90) faisant face à la lame d'air (22), le tuyau (51) étant compris entre un tube de serrage (52) (Fig.7 planche 7/11) et un embout d'étanchéité (53), le dispositif pneumatique (P18) mis sous pression obstrue la circulation de l'air dans la lame d'air (07) au niveau du calorifuge (09a) au moyen d'une évagination (92) (Fig.7 planche 7/11) dudit tuyau (51) et lesdits dispositifs pneumatiques (P20) et (P21) mis hors pression libérant simultanément la circulation de l'air dans les lames d'air (19) et (22) au moyen d'une rétractation (96) dudit tuyau (51), la libération de la circulation de l'air dans ces lames d'air (19) et (22) ayant pour effet de réchauffer le corps (21).

Le dispositif de rafraîchissement (60) comprend un panneau capteur de fraîcheur par convection (06), un panneau isolant (09), un autre panneau isolant (09a), un corps à rafraîchir (21), une circulation d'air descendante dans une lame d'air (07) rafraîchie par ledit panneau (05), ladite lame d'air (07) étant en contact avec le panneau capteur de fraîcheur par convection (05), une lame d'air (19) étant comprise entre le panneau isolant (09) et le panneau isolant (09a), une lame d'air (22) étant en contact avec le corps à rafraîchir (21) et une lame d'air (14) à la base du panneau calorifuge (09), ce dispositif est à fonctionnement pneumatique et comprend en outre un dispositif de régulation (100) comportant un compresseur d'air (64), un manostat (63), un distributeur de pression (57), un filtre d' air (66), un dessiccateur (62), une centrale de régulation (99) recevant des informations électriques correspondant à la température d'une sonde extérieure (th te), d'une sonde intérieure (th ti) et d'une sonde (th 07) située dans la lame d'air (07), un dispositif pneumatique (P18) comportant un tuyau (51) refermé sur lui-même étant encastré dans une cavité du calorifuge (09a) revêtu sur son périmètre, sauf au niveau de l'entrée de la cavité (90), d'une gaine de protection (98) juxtaposée à un embout d'étanchéité (53), l'entrée de la cavité (90) faisant face à la lame d'air (07), un dispositif pneumatique (P.21) comportant un tuyau (51) refermé sur lui-même étant encastré dans une cavité du calorifuge (09) revêtu sur son périmètre, sauf au niveau de l'entrée de la cavité (90), d'une gaine de protection (98) juxtaposée à un embout d'étanchéité (53), l'entrée de la cavité (90) faisant face à la lame d'air (19) ; un dispositif pneumatique (P20) comportant un tuyau (51) refermé sur lui-même étant encastré dans une cavité à la base du calorifuge (09) revêtu sur son périmètre, sauf au niveau de l'entrée de la cavité (90), d'une gaine de protection (98) juxtaposée à un embout d'étanchéité (53), l'entrée de la cavité (90) faisant face à la lame d'air (22), le tuyau (51) étant compris entre un tube de serrage (52) (Fig. 07 - planche 7/11) et un embout d'étanchéité (53), le dispositif pneumatique (P18) mis sous pression obstrue la circulation de l'air dans la lame d'air (07) au niveau du calorifuge (09a) au moyen d'une évagination (92) dudit tuyau (51) et lesdits dispositifs pneumatiques (P20) et (P21) mis hors pression libérant simultanément la circulation de l'air dans les lames d'air (19) et (22) au moyen d'une invagination (90) dudit tuyau (51), (Fig.6 planche 6/11) la libération de la circulation de l'air dans ces lames d'air (19) et (22) ayant pour effet de rafraîchir le corps (21).

La gaine de protection (98) est une gaine métallique afin d'assurer une bonne résistance aux efforts des pressions d'air exercés via le tuyau de caoutchouc sur le calorifuge.

La cavité (90) comporte un goulot d'étranglement permettant l'évagination (92) du tuyau (51) (Fig. 6 - planche 6/11) dans la lame d'air (07). Chaque cavité du calorifuge peut comprendre un ou plusieurs raccords (54).

Plusieurs dispositifs pneumatiques peuvent faire face à une seule lame d'air.

L'embout d'étanchéité (53) est incurvé au niveau du goulot d'étranglement de la cavité (90).

La mise en pression du dispositif pneumatique se fait au moyen d'un gaz (par exemple l'air, l'azote, dioxyde de carbone, ou tout autre gaz inerte.).

Ces cavités (90) sont pourvues d'une ouverture (90) sur toute la largeur du calorifuge jusqu'à un joint d'étanchéité situé de part et d'autre de cette cavité (90),

La pression d'air, variable suivant les installations, peut varier de 0,1 à 1 bar. Elle est fournie par un dispositif de régulation (99), installé sous abri, et comprenant: (FIG.10 ; planche 8/11) :
- une prise d'air à l'air libre, avant la vanne (67),
- un filtre à air (66),
- une vanne de sectionnement (65)
- un compresseur (64) fournissant de l'air à 1,50 bar maximum pour un débit variable suivant les besoins des différentes installations à desservir,
- un manostat (63) avec un régulateur de pression allant de 0 à 2 bar,
- une soupape de sûreté tarée de 0,5 à 3 bar suivant l'importance des installations.
- un filtre d'eau (62) avec produit de dessiccation;
- un filtre d'huile (61),
- une vanne de sectionnement (68)
- un distributeur de pression, (57), alimentant en air sous pression les tuyaux en caoutchouc souples (51) permettant de sélectionner, via le régulateur central (99), les tuyaux (51), à mettre sous pression ou hors pression.

L'air sous pression est envoyé aux différents tuyaux (51) en caoutchouc ou en matière plastique par l'intermédiaire d'un ou de plusieurs faisceaux de conduits d'air. Ces faisceaux de conduits d'air sont montés dans des cavités pratiquées dans la face côté corps à réchauffer (21) de l'isolant (09) ou autre, en cas de besoin.

Le raccordement des panneaux d'une même zone (FIG.7 - planche 7/11), se fait de panneaux à panneaux dans le sens vertical et (ou) horizontal. Ce raccordement se fait sur le raccord (54) opposé à celui utilisé pour l'alimentation d'un même tuyau (51).

Le distributeur de pression est pourvu de «mises à l'air» (dp = dépression) permettant de faire chuter la pression dans les tuyaux (51), leur permettant de s'invaginer, afin de libérer les lames d'air (07), (19) ou (22), selon les besoins.

De chaque côté du calorifuge (9) et (9a), (FIG. 7 - planche 7/11), les tuyaux (51) sont serrés par deux embouts d'étanchéité de forme carrée (53) et par deux tubes de serrage (52), dont le périmètre externe est identique à celui des tuyaux (51) afin d'éviter des tensions mécaniques néfastes aux tuyaux (51).

Les embouts d'étanchéité de forme carrée (53) et les tubes de serrage (52) reçoivent les raccords d'alimentations d'air (54) qui peuvent être montés sur leurs quatre côtés, du fait de la planéité de ces derniers.

### DISPOSITIF DE CHAUFFAGE D'UN FLUIDE COMPOSE D'UN SEUL DISPOSITIF PNEUMATIQUE

La présente invention peut être utilisée pour la préparation d'eau chaude sanitaire, pour le chauffage d'immeubles à façades non ensoleillées, de mansardes, de plafonds sous grenier, après aménagements spécifiques.

**Une autre VARIANTE de la présente invention (****fig. 11****-planche 9/11)** concerne un dispositif de chauffage (70) comprenant un panneau (05) capteur d'énergie radiative solaire (04), un panneau isolant (09), un fluide à réchauffer (71) pouvant être un ballon d'eau chaude et/ou une installation de chauffage d'un immeuble, d'une serre, etc, De l'air ascendant circule dans une lame d'air (07) chauffée par ledit panneau (05), passe dans un conduit d'air (79) relié à un autre conduit d'air (80) en contact avec le fluide à réchauffer (71). Le dispositif de la présente invention est pneumatique et comprend en outre un thermostat ou sonde (th 07) dans la lame d'air (07) procurant des informations électriques commandant l'ouverture ou la fermeture de la lame d'air (07) par le dispositif pneumatique (P78), ce dispositif comportant un tuyau (51) refermé sur lui-même et étant encastré dans une cavité du calorifuge (09a) revêtu sur son périmètre, sauf au niveau de l'entrée de la cavité (90), d'une gaine de protection (98) juxtaposée à un embout d'étanchéité (53), l'entrée de la cavité (90) faisant face à la lame d'air (07), le tuyau (51) étant compris entre un tube de serrage (52) et un embout d'étanchéité (53). Le dispositif pneumatique (P78) mis sous pression obstrue la circulation de l'air en partie haute dans la lame d'air (07) au niveau du calorifuge (09) au moyen d'une évagination dudit tuyau (51), ou libère la circulation de l'air dans la lame d'air (07) au moyen d'une invagination dudit tuyau (51), la libération de la circulation de l'air dans la lame d'air (07) ayant pour effet de réchauffer le fluide (71) et l'obstruction de la circulation de l'air dans la lame d'air (07) ayant pour effet d'éviter un refroidissement rapide du fluide (71) par inversion du circuit d'air au cas où la température est insuffisante (cette température seuil approchant environ les 55-65°C variant d'une installation à l'autre).

La figure 11, planche 9/11 décrit un dispositif pneumatique de préparation d'eau chaude à partir de panneaux (09) montés en toiture d'un immeuble, où une lame d'air 05 est réchauffée par l'ensoleillement (70) réchauffe une lame d'air (07) comprise entre un panneau (05) capteur d'énergie (04) et un calorifuge (09).

Du fait de l'ensoleillement, l'air chaud monte en haut du dispositif 79, redescend par une lame d'air 79, passe par un aérotherme dont la mise en route est commandée par un thermostat th.ea, placé en haut de l'aérotherme et qui met en route le ventilateur de ce dernier dès que la température de l'air atteint 50°C. en même temps qu'il commande l'ouverture de la vanne motorisée V.M. d'arrivée d'eau froide. L'eau sanitaire est réchauffée dans l'aérotherme et est évacuée par un tuyau (71) vers un réservoir d'eau chaude qui peut être placé près de l'aérotherme ou bien en un autre endroit d'un immeuble, par exemple au sous-sol.

### SCHEMAS DE FONCTIONNEMENT :

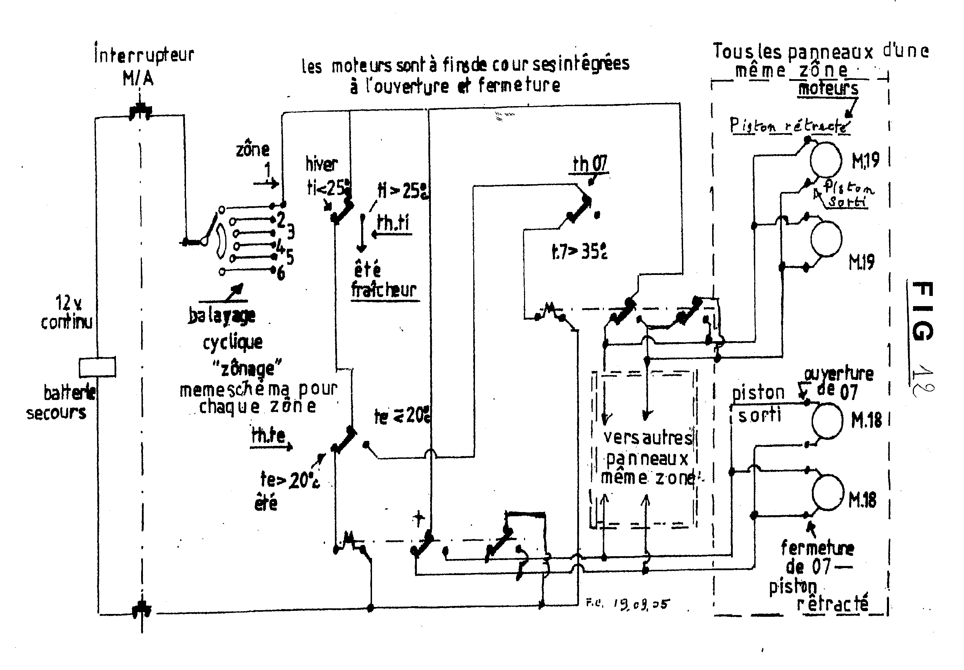

### FIG. 12 - Planche 10/11.

La figure 12 donne le schéma de principe du fonctionnement « tout électrique » de l'invention depuis l'alimentation en courant 12 V. continu monophasé jusqu'aux deux moteurs M.19 gauche et droit situés en bas des panneaux ainsi qu'aux deux moteurs M.18 gauche et droite situés en haut du panneau 09, juste en-dessous de la lame d'air transverse 19 suivant la FIG 1 planche 1/11. Le schéma parle de lui-même, les explications complémentaires n'ont pas d'utilité pour la compréhension de ce système.

### FIG. 13 - Planche 11/11

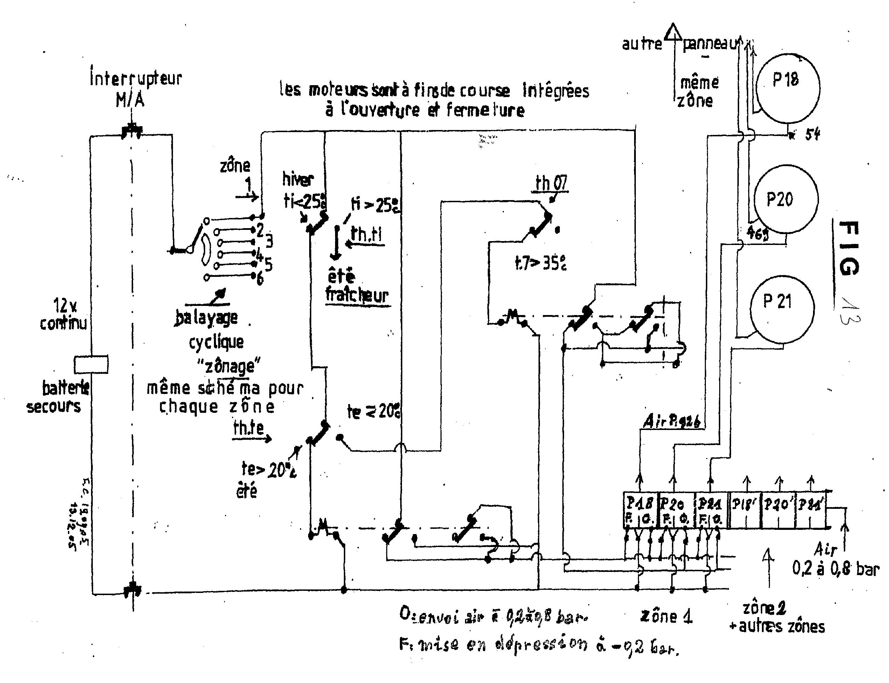

La figure 13 donne le schéma de principe du fonctionnement de l'invention depuis l'alimentation en courant 12 V continu monophasé jusqu'aux distributeurs de pression regroupés par trois unités chacune alimentant séparément en fluide sous pression les tubes P. 18, P. 19 et P.21 . - La mise hors pression des ces dispositifs est activée par l'ouverture de valves situées à la base des distributeurs de pression
(non représentées sur le schéma). Le schéma parle de lui-même et ne demande donc pas d'explications complémentaires.

## Revendications

1. Dispositif de chauffage (30)/ rafraîchissement (40) d'un corps à réchauffer/rafraîchir (21), comprenant:
un panneau capteur (05) d'énergie solaire (04)/fraîcheur;
un premier panneau isolant (09) et un second panneau isolant (09a) disposés entre le panneau capteur (06) et le corps à réchauffer/rafraîchir (21);
un premier passage d'air (07) situé entre le panneau capteur (06) et les deux panneaux isolants (09,09a);
un second passage d'air (22) situé entre le premier panneau isolant (09) et le corps à réchauffer/rafraîchir (21);
un troisième passage d'air (19) supérieur situé en haut du premier panneau isolant (09) entre les deux panneaux isolants (09,09a) et communiquant avec le second passage d'air (22) et pouvant être placé sélectivement en communication avec le premier passage d'air (07);
un quatrième passage d'air (14) inférieur situé en bas du premier panneau isolant (09) et communiquant avec le premier passage d'air (07) et pouvant être placé sélectivement en communication avec le second passage d'air (22);
un premier clapet (A.18) situé dans le premier passage d'air (07), ce premier clapet (A18) étant mobile entre une position ouverte dans laquelle il est écarté du premier panneau isolant (09) et le premier (07) et le troisième passage d'air (19) sont en communication, et une position fermée dans laquelle il engage le premier panneau isolant (09) et la communication entre le premier et le troisième passage (07,19) est bloquée;
un second clapet (A26) situé dans le second passage d'air (22), ce second clapet (A26) étant mobile entre une position ouverte dans laquelle le second passage d'air (22) est libéré et le second (22) et le quatrième passage d'air (14) sont en communication, et une position fermée dans laquelle le second passage d'air (22) est fermée et la communication entre le second et le quatrième passage (22,14) est bloquée;
deux moteurs (M18,M19) disposés dans le premier panneau isolant (09), chaque moteur (M18,M19) comportant au moins un piston (P20,P21) pour agir sur chacun des clapets (A18,A26) en vue de les actionner, ces moteurs (M18,M19) étant commandés automatiquement en réponse à la température dans le premier passage d'air (07), la température ambiante externe et la température interne du corps à réchauffer/rafraîchir (21), en vue d'un fonctionnement:
a) en mode de chauffage dans lequel les deux clapets (A18,A26) sont en position ouverte permettant la circulation d'une lame d'air vers le haut dans le premier passage d'air (07), puis par le troisième passage d'air (19) vers le second passage d'air (22) pour descendre dans celui-ci et revenir par le quatrième passage (14) vers le premier passage d'air (07); ou
b) en mode de rafraîchissement dans lequel les deux clapets (A18,A26) sont en position ouverte et la lame d'air circule en direction inverse dans les passages précités (07,14,22,19); ou
c) en mode d'arrêt dans lequel les deux clapets (A18,A26) sont en position fermée bloquant l'entrée de la lame d'air dans le troisième passage (19) et le flux de la lame d'air dans le second passage (22).

2. Dispositif selon la revendication 1 dans lequel le premier clapet (A18) comporte une lame souple fixée au second panneau isolant (09a).

3. Dispositif selon la revendication 1 dans lequel le second clapet (A26) comporte une lame souple (A11) fixée au premier panneau isolant (09).

4. Dispositif selon la revendication 1, comportant une centrale de commande (99) recevant des informations d'une sonde ou thermostat extérieur (th-te), d'une sonde ou thermostat intérieur (th-ti) et d'une sonde ou thermostat (th-07) situé dans le premier passage d'air (07), en vue de commander les moteurs (M18,M19).

5. Dispositif selon la revendication 1, comprenant une ouverture d'aération supérieure (3) pratiquée dans ledit panneau capteur (05) pour communication avec ledit premier passage d'air (07) au niveau du second panneau isolant (09a).

6. Dispositif selon la revendication 1, comprenant une ouverture d'aération inférieure (3a) pratiquée dans ledit panneau capteur (05) en bas du premier panneau isolant (09) pour communication avec le premier passage d'air (07).

7. Dispositif selon la revendication 1, dans lequel chacun des clapets (A18,A26) comporte une lame souple (A01,A11) pourvue d'un raidisseur (A02,A12), la lame souple et le raidisseur s'étendant approximativement le long de toute la largeur/longueur des deux panneaux isolants (09,09a).

8. Dispositif selon la revendication 1, dans lequel une ouverture d'aération supérieure (3) est pratiquée dans le panneau capteur (05) et communique avec le premier passage (07) en un endroit situé plus haut que la jonction du troisième passage d'air (19) au premier passage d'air (07), et une ouverture d'aération inférieure (3a) est pratiquée dans le panneau capteur (05) et communique avec le premier passage d'air (07), une lame d'air pouvant entrer dans le mode d'arrêt par l'ouverture d'aération inférieure (3a), monter dans le premier passage d'air (07) vers l'ouverture d'aération supérieure (3) et sortir par celle-ci.

9. Dispositif de chauffage (50)/rafraîchissement d'un corps à réchauffer/rafraîchir (21), comprenant:
un panneau capteur (05) d'énergie solaire/fraîcheur;
un premier panneau isolant (09) et un second panneau isolant (09a) disposés entre le panneau capteur (05) et le corps à réchauffer/rafraîchir (21);
un premier passage d'air (07) situé entre le panneau capteur (05) et les deux panneaux isolants (09,09a);
un second passage d'air (22) situé entre le premier panneau isolant (09) et le corps à réchauffer/rafraîchir (21);
un troisième passage d'air supérieur (19) situé en haut du premier panneau isolant (09) entre les deux panneaux isolants (09,09a) et communiquant avec le premier (07) et le second passage d'air (22);
un quatrième passage d'air inférieur (14) situé en bas du premier panneau isolant (09) et communiquant avec le premier (07) et le second passage d'air (22);
un premier dispositif pneumatique (P18) comportant un premier tuyau (51) flexible situé dans une cavité (94) formée dans le second panneau isolant (09a), cette cavité (94) ayant une entrée allongée en direction longitudinale de la cavité et débouchant dans le premier passage d'air (07), les extrémités du tuyau (51) étant fixées dans cette cavité (94) et fermées par un embout d'étanchéité (53), une gaine de protection (98) entourant le tuyau, sauf sur une partie correspondant à l'entrée allongée de ladite cavité;
un second dispositif pneumatique (P21) comportant un second tuyau (51) flexible situé dans une cavité (97) formée dans le premier panneau isolant (09), cette cavité (97) ayant une entrée allongée en direction longitudinale de la cavité et débouchant dans le troisième passage d'air (19), les extrémités du second tuyau (51) étant fixées dans cette cavité (97) et fermées par un embout d'étanchéité (53), une gaine de protection (98) entourant le tuyau, sauf sur une partie correspondant à l'entrée allongée de ladite cavité (97);
un troisième dispositif pneumatique (P20) comportant un troisième tuyau (51) flexible situé dans une cavité (90) formée dans le premier panneau isolant (09), cette cavité (90) ayant une entrée allongée en direction longitudinale de la cavité et débouchant dans le second passage d'air (22), les extrémités du troisième tuyau (51) étant fixées dans ladite cavité (90) et fermées par un embout d'étanchéité (53), une gaine de protection (98) entourant le troisième tuyau, sauf sur une partie correspondant à l'entrée allongée de la cavité (90);
une source de fluide sous pression, et un distributeur de pression fonctionnant automatiquement en réponse à la température dans le premier passage d'air (07), la température externe ambiante et la température du corps à réchauffer/rafraîchir, de façon à:
dans un mode de chauffage, mettre l'intérieur du premier tuyau flexible sous la pression de la source de fluide sous pression en vue de produire l'évagination de ce tuyau flexible par l'entrée de la cavité dans laquelle il est disposé en vue de fermer le premier passage d'air (07) au niveau du second panneau isolant (09a) et mettre le second et le troisième tuyau flexible hors pression afin de permettre l'invagination de ces deux tuyaux et permettre la circulation d'une lame d'air dans le second (22) et le troisième passage d'air (19) pour que l'air puisse monter dans le premier passage d'air (07), passer par le troisième passage (19) vers le second passage (22), descendre dans le second passage (22) et retourner par le quatrième passage (14) vers le premier passage (07), ou circuler en sens inverse dans un mode de rafraîchissement; et
dans un mode d'arrêt, mettre l'intérieur du deuxième et le troisième tuyau flexible sous la pression de la source de fluide sous pression en vue de produire une évagination de chacun de ces tuyaux flexibles par les entrées des cavités dans lesquelles ils sont disposés afin de fermer le second (22) et le troisième passage d'air (19) et mettre hors pression le premier tuyau flexible afin de permettre l'invagination de ce tuyau pour libérer le premier passage d'air (07) au niveau du second panneau isolant (09a).

10. Dispositif selon la revendication 9, dans lequel une ouverture d'aération supérieure (3) est pratiquée dans le panneau capteur (05) et communique avec le premier passage (07) en un endroit situé plus haut que l'entrée de la cavité du premier tuyau, et une ouverture d'aération inférieure (3a) est pratiquée dans le panneau capteur (05) et communique avec le premier passage d'air (07), une lame d'air pouvant entrer dans le mode d'arrêt par l'ouverture d'aération inférieure (3a) monter dans le premier passage d'air (07) vers l'ouverture d'aération supérieure (3) et sortir par celle-ci.

11. Dispositif selon la revendication 9, **caractérisé en ce que** la source de fluide sous pression comporte un compresseur (64), un manostat (63) et un distributeur de pression (58).

12. Dispositif selon la revendication 9, dans lequel la source de fluide sous pression comporte un filtre à air (66).

13. Dispositif selon la revendication 9 dans lequel la source de fluide sous pression comporte un dessiccateur (62).

14. Dispositif selon la revendication 9, dans lequel les gaines sont des gaines métalliques.

15. Dispositif selon la revendication 9, dans lequel la mise sous pression des tuyaux flexibles se fait au moyen d'un gaz.

16. Dispositif selon la revendication 9, dans lequel le premier tuyau (51) s'étend approximativement le long de toute la largeur/longueur du second panneau isolant (09a) et le second et le troisième tuyau s'étendent approximativement le long de toute la largeur/longueur du premier panneau isolant (09), les entrées des cavités dans lesquelles ces tuyaux sont situés étant des fentes s'étendant le long de la majeur partie de la longueur des cavités et des tuyaux en vue de fermer, à l'état de mise sous pression du ou des tuyau(x) respectif(s), le ou les passage(s) d'air coordonné(s) pratiquement le long de toute la largeur/longueur du panneau isolant concerné.

17. Dispositif selon la revendication 9, comportant une centrale de commande (99) recevant des informations d'une sonde ou thermostat extérieur (th-te), d'une sonde ou thermostat intérieur (th-ti) et d'une sonde ou thermostat (th-07) situé dans le premier passage d'air (07), en vue de commander la mise sous pression/hors pression des tuyaux précités.

18. Dispositif de chauffage héliothermique comportant:
un panneau (05) capteur d'énergie radiative solaire (04),
un panneau isolant (09),
un passage d'air (07) entre le panneau capteur (05) et le panneau isolant (09),
un conduit d'air (79) en contact avec un fluide à réchauffer (71),
un dispositif pneumatique (P18) pour placer le passage d'air (07) en communication avec le conduit (79) en contact avec le fluide à réchauffer (71), ou pour bloquer la communication du passage d'air (07) avec ce conduit (79),
ce dispositif pneumatique (P18) comportant un tuyau flexible (51) disposé dans une cavité formée dans le panneau isolant (09), cette cavité débouchant dans ledit passage d'air (07) par une entrée allongée en direction longitudinale du tuyau (51), ce tuyau étant fixé dans ladite cavité et fermé par des embouts d'étanchéité (53) à ses extrémités opposées, une gaine de protection (98) entourant le tuyau flexible à l'exception d'une partie correspondant à ladite entrée allongée de la cavité,
une source de fluide sous pression, cette source de fluide étant automatiquement branchée en réponse à la température dans ledit passage d'air (07) au tuyau flexible (51) en vue de mettre l'intérieur dudit tuyau flexible sous pression pour produire une évagination du tuyau flexible s'étendant par ladite entrée allongée et venant bloquer ledit passage d'air (07), et la source de fluide sous pression étant automatiquement débranchée du tuyau en réponse à ladite température en vue de mettre le tuyau flexible hors pression pour permettre une invagination de ce tuyau afin de libérer ledit passage d'air (07) et de le placer en communication avec le conduit d'air (79) en contact avec le fluide à réchauffer (71).

19. Dispositif selon la revendication 18 dans lequel le tuyau flexible (51) s'étend approximativement le long de toute la largeur/longueur du panneau isolant (09), l'entrée de la cavité ayant la forme d'une fente, s'étendant sur la majeure partie de la longueur de la cavité en vue de fermer, à l'état de mise sous pression du tuyau, le passage d'air pratiquement le long de toute la largeur/longueur du panneau isolant (09).

20. Dispositif selon la revendication 18, comportant une centrale de commande recevant des informations d'une sonde ou thermostat disposé dans le passage d'air (07) pour brancher respectivement débrancher la source de fluide sous pression.
